# EUROPÄISCHE PATENTSCHRIFT

(11) **EP 4 265 844 B1**
(45) Veröffentlichungstag und Bekanntmachung des Hinweises auf die Patenterteilung: **03.09.2025**
(21) Anmeldenummer: 23164975.7
(22) Anmeldetag: 29.03.2023
(51) Int. Cl.: E01C 23/088, B60J 7/00

(54) **SELBSTFAHRENDE BODENBEARBEITUNGSMASCHINE MIT IN MASCHINENLÄNGSRICHTUNG LÄNGENVERÄNDERLICHEM DACH**
SELF-PROPELLED SOIL WORKING MACHINE WITH A ROOF THAT CAN BE VARIED IN LENGTH DIRECTION OF THE MACHINE
MACHINE AUTOMOTRICE DE TRAVAIL DU SOL AVEC TOIT DE LONGUEUR VARIABLE DANS LA DIRECTION LONGITUDINALE DE LA MACHINE

(30) Priorität: 22.04.2022 DE 102022109729
(43) Veröffentlichungstag der Anmeldung: 25.10.2023
(73) Patentinhaber: Wirtgen GmbH, 53578 Windhagen (DE)
(72) Erfinder: Drumm, Stephan, 53560 Vettelschoß (DE); Lull, Roland, 53639 Königswinter (DE)
(74) Vertreter: Ruttensperger Lachnit Trossin Gomoll

(56) Entgegenhaltungen:
- EP-A1- 0 810 324
- EP-A1- 3 489 416
- EP-A2- 2 786 884
- DE-A1- 102010 024 687
- JP-A- 2003 267 057
- JP-A- H08 197 957
- JP-B2- 6 877 744
- KR-A- 20120 129 220
- US-A1- 2009 192 682

## Beschreibung

Die vorliegende Erfindung betrifft eine selbstfahrende Bodenbearbeitungsmaschine zur Material abtragenden oder/und eine Bodenmaterialdichte verändernden oder/und eine Bodenoberfläche verändernden oder/und Material auftragenden Bearbeitung eines Bodenbereichs gemäß dem Oberbegriff des Anspruchs 1.

Eine solche selbstfahrende Bodenbearbeitungsmaschine kann bei abtragender Bodenbearbeitung eine Straßenfräsmaschine, ein Surface Miner oder ein Recycler sein, wobei der Recycler auch zunächst vom Boden abgetragenes Material auf einen Bodenbereich aufträgt. Die selbstfahrende Bodenbearbeitung Maschine kann bei rein auftragender Bodenbearbeitung ein Straßenfertiger, wie beispielsweise ein Asphaltierer oder ein Gleitschalungsfertiger sein. Dies sind nur einige Beispiele, weitere Bodenbearbeitungsmaschinen, wie etwa selbstfahrende Bodenverdichter sind denkbar bzw. bekannt.

Ein Gabelstapler mit ansonsten allen Merkmalen des Oberbegriffs des Anspruchs 1 ist aus der KR 10-2012-0129220 A bekannt. Der Gabelstapler hat einen starren Dachaufbau. Der starre Dachaufbau umfasst eine rahmenfeste Dachgestellstruktur mit zwei in Staplerlängsrichtung verlaufenden parallelen Schienen, welche an entgegengesetzten Seiten der über dem Fahrersitz befindlichen Dachpartie angeordnet sind und einen in Fahrzeuglängsrichtung ausziehbaren Dachrollo seitlich führen.

Eine selbstfahrende Bodenbearbeitungsmaschine ist aus der EP 3 489 416 A1 bekannt. Die bekannte Bodenbearbeitungsmaschine zeigt einen seitlich in Maschinenquerrichtung durch Auszüge vergrößerbaren Fahrstand. Damit auch der durch die Auszüge vergrößerte Fahrstand durch das Dach des Fahrstands abgedeckt sein kann, weist das Dach der bekannten Bodenbearbeitungsmaschine auf jeder Seite des Daches in Maschinenquerrichtung je ein verlagerbares Schalenteil auf, durch dessen Verlagerung die Dachfläche in Maschinenquerrichtung vergrößert und wieder auf die ursprüngliche Dachfläche verkleinert werden kann.

Das Dach der bekannten Bodenbearbeitungsmaschine ist außerdem in Maschinenhöhenrichtung verlagerbar, um die von der Maschine eingenommene Projektionsfläche bei Projektion in Maschinenlängsrichtung für einen Transport möglichst gering zu halten. Die möglichst geringe Projektionsfläche ist auch der Grund dafür, warum der Fahrstand durch Auszüge in Maschinenquerrichtung erweiterbar ist und nicht dauerhaft mit größerer Breite ausgebildet ist. Durch die so erreichten Abmessungen können Transporte der Bodenbearbeitungsmaschine gemäß geltender Gesetzeslage ohne Sondergenehmigung durchgeführt werden.

Eine weitere Bodenbearbeitungsmaschine mit höhenveränderlicher Dachposition ist aus der DE 10 2008 047 583 A1 bekannt. Dort ist das Dach durch eine Hartschale ohne bewegliche Teile mit konstanter Dachfläche gebildet. Im Gegensatz zum geradlinig translatorisch in Maschinenhöhenrichtung verlagerbaren Dach der EP 3 489 416 A1 ist das Dach der aus der DE 10 2008 047 583 A1 bekannten Bodenbearbeitungsmaschine mittels eines aus einer vorderen Windschutzscheibe und einer Heckscheibe Parallelogramm-Lenkergetriebes längs einer gekrümmten Bahn translatorisch verlagerbar, sodass das abgesenkte Dach nicht über dem Fahrstand, sondern über davor oder dahinter liegende Bereiche des Maschinenkörpers angeordnet ist. Die Dachschale ist an dem Parallelogramm-Lenkergetriebe in Maschinenquerrichtung verschiebbar.

Aus der EP 3 412 830 A1 ist eine Bodenbearbeitungsmaschine in Gestalt eines Straßenfertigers bekannt, dessen Dachfläche ebenfalls konstant ist, dessen Dach jedoch ein Rollosystem oder ein Sektionalsystem trägt, mit welchem eine dem Heck des Straßenfertigers zugewandte Zugangsöffnung vom Dach aus verschlossen werden kann.

Die oben beschriebene abgesenkte Stellung des Daches dient in der Regel dem Transport der Maschine. Bei abgesenktem Dach sind die Maschinen nur eingeschränkt oder nicht bedienbar. Eine Ausnahme hiervon bildet die aus der DE 20 2013 006 878 U1 bekannte Straßenfräsmaschine, deren Dach mit konstanter Dachfläche ebenfalls über ein Lenkergetriebe längs einer krummlinigen Bahn translatorisch zwischen einer angehobenen und einer abgesenkten Stellung verlagerbar ist. In der abgesenkten Stellung ruht das Dach auf dem Maschinenkörperabschnitt vor dem Fahrstand. Da das Lenkergetriebe ausschließlich vor dem Fahrstand am Maschinenkörper angelenkt ist, ist der Fahrstand bei abgesenkten Dach uneingeschränkt nutzbar. Allerdings kann der Maschinenführer auch dieser Straßenfräsmaschine nur zwischen einem entweder vollständig angehobenen oder einem vollständig abgesenkten Dach wählen. Zwischenstellungen sind wegen der krummlinigen Bewegungsbahn des Daches nicht realisierbar, da das Dach ansonsten im Sichtbereich vor dem Maschinenführer angeordnet wäre.

Aus der EP 0 810 324 A1 ist ein Straßenfertiger bekannt, dessen Dachfläche an dessen heckseitigem Längsende durch Verlängerungsteile in Richtung zum Heck des Fertigers verlängert werden kann. Zum Transport des Straßenfertigers kann das gesamte Schutzdach zum Heck des Fertigers hin geneigt werden, um die Bauhöhe des Fertigers zu verringern.

Aus der DE 10 2010 024 687 A1 ist ein klappbares Fahrerschutzdach für Arbeits- und Erdbaumaschinen bekannt. Das Fahrerschutzdach weist zwei in einer gestreckten Dachstellung längs einer Rollachse der das Fahrerschutzdach tragenden Maschine aufeinander folgende Dachplatten auf, welche um eine nickachsenparallele Klappachse zwischen der gestreckten Stellung und einer eingeklappten Stapelstellung klappbar sind. In der Stapelstellung liegen die Dachplatten übereinander.

Aus der US 2009/0192682 A1 ist eine selbstfahrende Bodenbearbeitungsmaschine mit Raupenfahrwerk bekannt, deren die Dachfläche bestimmendes Dachbauteil verlagerbar ist. In einer Ausführungsform der US 2009/0192682 A1 ist eine starre Frontscheibe mit einem starren Dachbauteil um eine nickachsenparallele Klappachse klappbar verbunden. Die starre Frontscheibe kann unter Führung ihres unteren Endes in einer Schiene zwangsgeführt angehoben und, in angehobener Stellung, zum Maschinenheck hin verlagert werden, wobei das mit seinem heckseitigen Längsende um eine nickachsenparallele Schwenkachse schwenkbar an der Dachkonstruktion angelenkte starre Dachbauteil mit zunehmender Verlagerung der Frontscheibe zum Maschinenheck hin aus einer ursprünglich horizontalen Stellung zunehmend steiler gestellt wird.

Aus der JP 6877744 B2 ist ein Fertiger mit einem Dachaufbau bekannt, bei welchem am heckseitigen Längsende des den Fahrstand überspannenden Daches eine Zusatzplatte um eine nickachsenparallele Schwenkachse schwenkbar angeordnet ist, um dem Maschinenführer erforderlichenfalls zusätzlichen Sonnenschutz bereitzustellen. Bei Nichtgebrauch kann die Zusatzplatte unter das Dach eingeklappt werden.

Aus der JP H08-197957 A ist eine Dachstruktur für eine fahrbare Arbeitsmaschine bekannt. Die über dem Fahrstand angeordnete Dachplatte ist in Längsrichtung des Fahrzeugs unter Veränderung der Dachfläche teleskopierbar. An den Seiten und am heckseitigen Längsende kann ein Dachbalg herabgeschwenkt werden.

Aus der JP 2003-267057 A ist ein Bagger mit Raupenfahrwerk bekannt, dessen Dachfläche durch teleskopierbare Dachteile in Baggerlängsrichtung oder/und in Baggerquerrichtung vergrößerbar ist.

Grundlegendste Aufgabe der vorliegenden Erfindung ist es, dem Maschinenführer eine möglichst individuelle Gestaltung seines Arbeitsbereichs, also des Fahrstands, während einer Bodenbearbeitung zu ermöglichen.

Diese Aufgabe löst die vorliegende Anmeldung an einer selbstfahrenden Bodenbearbeitungsmaschine der eingangs genannten Art dadurch, dass die Größe der Dachfläche in Maschinenlängsrichtung veränderbar ist. Da sich, je nach konstruktiver Ausgestaltung der Bodenbearbeitungsmaschine wenigstens zu einer Seite des Fahrstands in Maschinenlängsrichtung, häufig zu beiden Seiten des Fahrstands in Maschinenlängsrichtung, ein sich über die gesamte Breite des Fahrstands erstreckender Maschinenkörper befindet, während der Fahrstand seitlich, also in Maschinenquerrichtung, häufig nur durch eine Reling begrenzt ist, kann ein mit in Maschinenlängsrichtung mit veränderbarer Dachlänge ausgebildetes Dach sicher am Maschinenrahmen, gewünschtenfalls unter Zwischenanordnung weiterer Bauteile des Maschinenkörpers, angeordnet werden. Durch die in Maschinenlängsrichtung veränderbare Länge einer über einer Plattform des Fahrstandes angeordneten oder anordenbaren Dachfläche kann der Maschinenführer ohne jede Behinderung seiner Arbeit auf dem Fahrstand wählen, ob er gleichsam mit oder ohne Dach arbeiten möchte. So kann er sich zum einen vor Witterung und übermäßiger Sonneneinstrahlung schützen, jedoch bei abnehmenden Tageslicht durch Verringerung der Dachfläche für eine Verbesserung der Sichtverhältnisse in seinem Fahrstand sorgen.

Die Bodenbearbeitungsmaschine weist zur Veränderung der Dachfläche in Maschinenlängsrichtung eine in Maschinenlängsrichtung längenveränderliche Dachstruktur bzw. ein in Maschinenlängsrichtung längenveränderliches Dachbauteil auf. Die Dachstruktur und damit die Dachfläche sind bevorzugt über wenigstens 90 % der in Maschinenquerrichtung zu messenden Breite, besonders bevorzugt über die gesamte Breite der Dachstruktur bzw. des Dachbauteils, insbesondere der Dachfläche, in Maschinenlängsrichtung veränderlich.

Die Dachstruktur bzw. das Dachbauteil kann als Ganzes in Maschinenquerrichtung verschieblich aufgenommen sein. Bevorzugt ist die Dachfläche nicht in Maschinenquerrichtung größenveränderlich. Das in Maschinenlängsrichtung längenveränderliche Dachbauteil, insbesondere das nachfolgend noch näher erläuterte Leitbauteil, kann bei seiner Längenveränderung bzw. Bewegung in Maschinenlängsrichtung auch eine Bewegungskomponente in Maschinenhöhenrichtung aufweisen. Dadurch kann beispielsweise eine Dachfläche gebildet werden, welche um eine in Maschinenquerrichtung verlaufende Neigeachse geneigt ist. So kann der Maschinenführer gegen Sonneneinstrahlung auch bei tiefer stehender Sonne abgeschirmt werden. Die Bewegungskomponente in Maschinenlängsrichtung ist bevorzugt für jeden Bewegungsabschnitt einer Veränderung der Dachfläche größer als die dabei auftretende Bewegungskomponente in Maschinenhöhenrichtung.

Grundsätzlich kann das Dach mit in Maschinenlängsrichtung veränderbarer Dachfläche nur zwischen zwei Stellungen unterschiedlicher Dachflächen, etwa einer Stellung mit minimaler Dachfläche und einer Stellung mit maximaler Dachfläche, veränderbar sein. Bevorzugt kann das Dach in mehrere jeweils stabile Zwischenstellungen bringbar sein, von welchen jede Zwischenstellung eine andere Dachflächengröße aufweist. Die Zwischenstellungen können durch eine gestufte Veränderbarkeit der Dachfläche in Maschinenlängsrichtung oder bevorzugt durch eine stufenlose Veränderbarkeit der Dachfläche eingenommen werden. Veränderbarkeit der Dachfläche bedeutet dabei Längenveränderlichkeit der Dachstruktur bzw. des Dachbauteils in Maschinenlängsrichtung.

Um zu verhindern, dass ein die Dachfläche bildendes Dachflächenmaterial bei stark verkleinerter bzw. minimaler Dachfläche einen unerwünscht großen Stauraum einnimmt, kann das Dach einen Basisabschnitt und einen Ausziehabschnitt aufweisen. Der Ausziehabschnitt ist dann bevorzugt relativ zum Basisabschnitt in Maschinenlängsrichtung ausziehbar und einfahrbar. Die Dachfläche ist somit abhängig von der Ausziehlänge, längs welcher der Ausziehabschnitt vom Basisabschnitt ausgezogen ist, veränderbar.

Konstruktiv kann die Ausziehbarkeit des Ausziehabschnitts relativ zum Basisabschnitt auf unterschiedliche Weisen realisiert sein. Beispielsweise kann der Ausziehabschnitt zur Bildung wenigstens eines Teils der Dachfläche, vorzugsweise eines Großteils der Dachfläche, ein wickelbares Dachflächenmaterial umfassen. Das Dachflächenmaterial kann dann bei minimal eingestellter Dachfläche bei geringer Stauraumbeanspruchung in einer Rolle im Basisabschnitt aufgenommen sein und kann zur Vergrößerung der Dachfläche von der Rolle durch Ausziehen des Dachflächenmaterials in Maschinenlängsrichtung abgewickelt werden.

Zusätzlich oder alternativ kann das Dachflächenmaterial faltbar sein, sodass der in Maschinenlängsrichtung längenveränderliche Dachabschnitt als Faltenbalg ausgebildet sein kann.

Das wickelbare oder/und das faltbare Dachflächenmaterial kann ein flexibles Dachflächenmaterial sein, etwa ein Fasermaterial oder eine Folie, insbesondere Kunststofffolie. Das Dachflächenmaterial kann auch als faserverstärkte Kunststofffolie eine Kombination aus Fasermaterial und Folie sein. Das Fasermaterial kann ein Gewebe oder Gewirke sein, zum besseren Schutz vor Witterung insbesondere ein imprägniertes Gewebe oder Gewirke. Dann, wenn das Fasermaterial als Verstärkung in einer Kunststofffolie angeordnet ist, kann es darüber hinaus als Fasergewirr oder Fasergelege vorliegen.

Eine weitere zusätzlich oder alternativ anwendbare Möglichkeit einer längenveränderlichen Ausgestaltung eines Dachs des Fahrstands liegt in der Verwendung von relativ zueinander in Maschinenlängsrichtung unter Änderung ihres Überlappungsgrads verschiebbaren Schalenbauteilen als Dachflächenmaterial. Die Schalenbauteile können eben oder zur Erhöhung ihrer Stabilität gekrümmt, vorzugsweise um eine in Maschinenlängsrichtung und somit in Relativbewegungsrichtung der Schalenbauteile verlaufende Krümmungsachse gekrümmt, oder um eine in Maschinenlängsrichtung verlaufende Profilachse profiliert sein, ähnlich wie dies von Teleskopabdeckungen von Bewegungsführungen von Werkzeugmaschinen bekannt ist. Die Schalenbauteile können einander schuppenartig überlagernd angeordnet sein, wobei benachbarte Schuppenbauteile jeweils paarweise relativ zueinander in Maschinenlängsrichtung beweglich sind. Die Schalenbauteile können als profilierte Bauteile teleskopartig relativ zueinander Maschinenlängsrichtung beweglich sein.

Durch Verwendung der genannten Schalenbauteile kann ein stabileres bzw. gegen darauf fallende Gegenstände widerstandsfähigeres Dach als durch die zuvor genannten flexiblen Materialbahnen aus Fasermaterial oder/und Folie erhalten werden.

Mit "flexibel" ist vorstehend ein Dachflächenmaterial bezeichnet, welches als dünne Materialbahn vorliegt, die im ausgebreiteten Zustand formlabil ist und sich im ausgebreiteten Zustand ohne stützende Struktur unter der Wirkung ihres Eigengewichts verformt. Im Falle eines Faltenbalgs als eine die längenveränderliche Dachfläche bildende Struktur wird durch die ausgebildeten Falten eine Versteifung des Dachflächenmaterials erreicht, die ein ungefaltetes Dachflächenmaterial gleicher stofflicher Zusammensetzung nicht aufweist.

Zur Erleichterung des Ausziehens des Ausziehabschnitts weg vom Basisabschnitt weist gemäß der vorliegenden Erfindung der Ausziehabschnitt ein von der vom Dachflächenmaterial gebildeten Dachfläche verschiedenes Leitbauteil auf. Das Leitbauteil ist in Maschinenlängsrichtung vom Basisabschnitt entfernbar und an den Basisabschnitt annäherbar. Zur Bildung einer definierten Dachfläche ist erfindungsgemäß zwischen dem Leitbauteil und dem Basisabschnitt das Dachflächenmaterial angeordnet. Das Leitbauteil kann im Falle der Verwendung eines wickelbaren oder faltbaren Dachflächenmaterials eine höhere Bauteilsteifigkeit, insbesondere Biegesteifigkeit um eine in Maschinenlängsrichtung verlaufende Biegeachse, aufweisen. Bevorzugt ist das Leitbauteil im Gegensatz zum wickelbaren oder faltbaren Dachflächenmaterial eigensteif, d. h. es behält unter der Belastung durch sein Eigengewicht seine gegebene Gestalt.

Das Leitbauteil kann eine Leiste umfassen oder sein, welche sich bevorzugt über wenigstens 90 % der in Maschinenquerrichtung zu messenden Breite des Dachflächenmaterials, besonders bevorzugt über die gesamte Breite des Dachflächenmaterials, besonders bevorzugt sogar beidseitig darüber hinaus erstreckt. Das Leitbauteil kann kostengünstig als Strangpressprofil bzw. Extrusionsprofil ausgebildet sein, je nachdem ob das Leitbauteil aus Metall oder aus Kunststoff gebildet ist, was beides möglich ist.

Das Leitbauteil kann zum Kraftangriff für ein Ausziehen des Ausziehabschnitts ausgebildet sein. Das Dachflächenmaterial kann hierzu einen Leitabschnitt aufweisen, welcher bei einem die Dachfläche vergrößernden Ausziehen des Ausziehabschnitts weiterem Dachflächenmaterial vorauseilt und zur gemeinsamen Bewegung mit dem Leitbauteil am Leitbauteil festgelegt ist. Dann bewirkt aufgrund der beschriebenen Festlegung eine Bewegung des Leitbauteils in Maschinenlängsrichtung vom Basisabschnitt weg auch eine Bewegung von Dachflächenmaterial vom Basisabschnitt weg.

Das Leitbauteil ist erfindungsgemäß durch eine Führungsstruktur mit dem Basisabschnitt des Daches verbunden, um die Relativbewegung des Leitbauteils vom Basisabschnitt weg und zu diesem hin zu führen. Die Führungsstruktur umfasst erfindungsgemäß wenigstens einen Gelenkarm, ein Scherengetriebe oder teleskopierbare Führungsstangen.

Um sicher zu ermöglichen, dass das Dachflächenmaterial den Fahrstand wenigstens abschnittsweise in Maschinenlängsrichtung trotz der Beweglichkeit des Dachflächenmaterials relativ zum Basisabschnitt überspannen kann, umfasst der Basisabschnitt bevorzugt ein Basisbauteil, an welchem ein Festlegeabschnitt des Dachflächenmaterials festgelegt ist. So kann der Leitabschnitt und der Festlegeabschnitt durch unterschiedliche Schalenbauteile gebildet sein, zwischen welchen weitere in Maschinenlängsrichtung relativ zueinander bewegliche Schalenbauteile angeordnet sind, deren Abmessung und Relativbewegungsweg in Maschinenlängsrichtung die Ausziehlänge der Dachfläche relativ zum Basisabschnitt wesentlich bestimmt.

Alternativ oder zusätzlich kann der Leitabschnitt ein erster Endabschnitt eines wickelbaren oder/und faltbaren Dachflächenmaterials sein und kann der Festlegeabschnitt ein dem ersten Endabschnitt mit Abstand in Wicklungsrichtung bzw. Ausziehrichtung entgegengesetzter zweiter Endabschnitt sein, wobei der Abstand zwischen Leitabschnitt und Festlegeabschnitt längs der dazwischenliegenden Materialoberfläche ein Maß für die mögliche Ausziehlänge des Ausziehabschnitts ist.

Der Basisabschnitt, insbesondere das Basisbauteil oder ein mit dem Leitbauteil verbundener Teil desselben, kann um die oben genannte in Maschinenquerrichtung verlaufende Neigeachse verdrehbar mit dem Maschinenrahmen gekoppelt sein, um eine Dachneigung innerhalb eines verfügbaren Einstellbereichs einstellen zu können.

Das Basisbauteil kann, wie das Leitbauteil, ein eigensteifes Bauteil sein, etwa eine Leiste, ein Rohr oder eine Stange, an welche der Festlegeabschnitt des Faltenbalgs oder das den Festlegeabschnitt bildende Schalenbauteil befestigt ist, etwa durch Klemmen, Kleben, Nieten, Schrauben oder/und formschlüssiges Hintergreifen, um nur einige Festlegemöglichkeiten zu nennen. Im Falle einer Ausbildung des Festlegeabschnitts durch ein wickelbares Dachflächenmaterial umfasst das Basisbauteil bevorzugt einen um eine Wickelachse drehbaren Wickelrollenkern, an dem der Festlegeabschnitt des wickelbaren Dachflächenmaterials in wenigstens einer der oben genannten Festlegemöglichkeiten festgelegt ist. Auch der Wickelrollenkern kann beispielsweise ein Rohr oder eine Stange umfassen oder sein, bevorzugt zur Bereitstellung möglichst gleichmäßiger Ausziehkräfte über einen Ausziehvorgang hinweg ein zylindrisches Rohr oder eine zylindrische Stange.

Der Basisabschnitt, und insbesondere das Basisbauteil, erstreckt sich bevorzugt um mehr als die Breite des Dachflächenmaterials in Maschinenquerrichtung, damit der Basisabschnitt das Dachflächenmaterial ohne es zu falten in Maschinenlängsrichtung aufnehmen und abgeben kann.

Bevorzugt ist der Wickelrollenkern durch Vorspannmittel in einem Drehsinn um eine den Wickelrollenkern zentral durchsetzend gedachte, bevorzugt in Maschinenquerrichtung verlaufende Wickelachse vorbelastet, sodass das wickelbare Dachflächenmaterial durch die Vorbelastung des Wickelrollenkerns selbsttätig auf diesen zu einer Dachflächenmaterialrolle aufgewickelt und gegen die Vorbelastung des Wickelrollenkerns von der Dachflächenmaterialrolle abgewickelt wird. Dadurch wird erreicht, dass die durch das wickelbares Dachflächenmaterial gebildete Dachfläche in dem Bereich zwischen Leitbauteil und Basisbauteil stets gespannt ist und den Maschinenführer durch seine materialintrinsische Formlabilität nicht stört.

Zum Schutz des Dachflächenmaterials, insbesondere im eingefahrenen Zustand mit nur geringer oder keiner Dachfläche, also bei geringem Abstand von Leitbauteil und Basisbauteil in Maschinenlängsrichtung, kann der Basisabschnitt in vorteilhafter Weiterbildung eine Gehäuseschale umfassen, welche den Ausziehabschnitt in dessen eingefahrenem Zustand wenigstens teilweise umgibt. Bevorzugt umgibt die Gehäuseschale den Ausziehabschnitt in Umfangsrichtung bis auf einen vom Dachflächenmaterial durchsetzten Ausziehspalt vollständig. Bei vollständig eingefahrenem Ausziehabschnitt schließt bevorzugt das Leitbauteil den Ausziehspalt ab.

Die Gehäuseschale des Basisabschnitts kann das, gegebenenfalls mehrteilig ausgebildete, Basisbauteil sein, an welchem ein Faltenbalg oder ein Schalenbauteil festgelegt ist. Alternativ oder zusätzlich kann in der Gehäuseschale der Wickelrollenkern um die Wickelachse drehbar gelagert sein.

Zur Stabilisierung des längenveränderlichen Daches kann am Maschinenkörper oder/und am Ausziehabschnitt, insbesondere am Leitbauteil, als einem Stützvorrichtungsträger eine Stützvorrichtung angeordnet sein, durch welche der Ausziehabschnitt, insbesondere das Leitbauteil, am Maschinenkörper der Maschine abstützbar ist. Damit die Stützvorrichtung während der Bewegung von Dachflächenmaterial in Maschinenlängsrichtung nicht stört bzw. nicht mit Personen oder Gegenständen kollidiert, kann die Stützvorrichtung relativ zum Stützvorrichtungsträger beweglich sein zwischen einer Inaktivstellung und einer Aktivstellung. In der Inaktivstellung verläuft die Stützvorrichtung bevorzugt parallel zur Dachfläche, insbesondere parallel zum Leitbauteil. In der Aktivstellung ist die Stützvorrichtung an ihrem vom Stützvorrichtungsträger fernen Ende am Maschinenkörper abgestützt. Der Maschinenkörper umfasst den Maschinenrahmen und am Maschinenrahmen, gegebenenfalls relativ zu diesem beweglich, angeordnete Strukturbauteile.

Die Stützvorrichtung kann daher wenigstens eine umklappbare oder/und ausziehbare, insbesondere teleskopierbare, Stütze aufweisen. Bevorzugt weist die Stützvorrichtung wenigstens zwei in Maschinenquerrichtung mit Abstand voneinander angeordnete relativ zum Stützvorrichtungsträger bewegliche, insbesondere umklappbare oder/und ausziehbare, insbesondere teleskopierbare, Stützen auf, um eine Kippneigung des Ausziehabschnitts um eine in Maschinenlängsrichtung verlaufende Kippachse unterbinden zu können.

Ein Vorteil einer Anordnung der Stützvorrichtung am Leitbauteil als Träger liegt darin, dass das Dach unabhängig von seiner jeweils gewählten Dachfläche, also etwa unabhängig von der Ausziehlänge des Ausziehabschnitts am Maschinenkörper abgestützt werden kann.

Die Bodenbearbeitungsmaschine kann, insbesondere als Teil des Fahrstands, eine in Maschinenquerrichtung verlaufende Schutzscheibe umfassen, um den Maschinenführer wenigstens im Bereich der Schutzscheibe vor äußeren Einflüssen abzuschirmen. Zur Stabilisierung des Daches weist die Schutzscheibe bevorzugt eine Kopplungsstruktur auf und weist das Leitbauteil bevorzugt eine Gegenkopplungsstruktur auf. So können die Kopplungsstruktur und die Gegenkopplungsstruktur bei ausreichender Annäherung des Leitbauteils an die Schutzscheibe mit einander lösbar koppelbar sein. Bevorzugt weist die Schutzscheibe einen Scheibenrahmen auf, welche die Kopplungsstruktur trägt. Eine Struktur aus Kopplungsstruktur und Gegenkopplungsstruktur kann beispielsweise einen Vorsprung aufweisen, welche in eine Ausnehmung der jeweils anderen Struktur einführbar und darin verrastbar ist.

Die Schutzscheibe kann eine näher bei der Maschinenvorderseite gelegene vordere Scheibe oder eine näher beim Maschinenheck gelegene Heckscheibe sein, je nachdem, wo sich das Leitbauteil im ausgezogenen Zustand des Daches befindet. Dabei ist ein ausgezogener Zustand ein Zustand, bei welchem sich das Leitbauteil in Maschinenlängsrichtung mit Abstand vom Basisabschnitt bzw. vom Basisbauteil befindet, sodass wenigstens ein Abschnitt des Dachflächenmaterials den Fahrstand überspannt. Allerdings ist es bevorzugt, dass der ausgezogene Zustand ein maximal ausgezogener Zustand oder ein Zustand mit einer erreichten Auszugslänge von wenigstens 80 %, vorzugsweise von wenigstens 90 %, der maximalen Auszugslänge ist.

Die Schutzscheibe ist dann eine Ausgestaltungsform der zuvor genannten Stützvorrichtung. Eine gesonderte Stützvorrichtung kann entfallen.

Die Bodenbearbeitungsmaschine kann zusätzlich oder alternativ eine in Maschinenquerrichtung verlaufende Scheibe umfassen, welche bei vorhandener Schutzscheibe in Maschinenlängsrichtung mit Abstand von der Schutzscheibe angeordnet ist. Die Scheibe weist bevorzugt eine Verbindungsstruktur auf und die Gehäuseschale weist bevorzugt eine Gegenverbindungsstruktur auf. Die Verbindungsstruktur und die Gegenverbindungsstruktur sind miteinander verbunden oder lösbar verbindbar. Da die Gehäuseschale des Basisabschnitts während des Betriebs der Bodenbearbeitungsmaschine in Maschinenlängsrichtung relativ zum Maschinenrahmen nicht oder nur längs eines erheblich kürzeren Bewegungswegs bewegbar ist, kann die Gehäuseschale dauerhaft mit der Scheibe verbunden sein. Für die Schutzscheibe und das Leitbauteil gilt dies in der Regel nicht, da das Leitbauteil beim Einfahren des Ausziehabschnitts in den Basisabschnitt sich in der Regel von der Schutzscheibe in Maschinenlängsrichtung entfernen muss. Für die Verbindungsstruktur und die Gegenverbindungsstruktur gilt das oben zur Kopplungsstruktur bzw. Gegenkopplungsstruktur Gesagte mutatis mutandis entsprechend. Die genannten Strukturen können identisch ausgebildet sein und sind lediglich sprachlich unterschieden, um ihre Zugehörigkeit einmal zur Paarung Schutzscheibe-Leitbauteil und ein andermal zur Paarung Scheibe-Gehäuseschale zu unterscheiden.

Wenigstens ein Scheibenbauteil aus Schutzscheibe und die Scheibe kann relativ zum Maschinenrahmen bewegbar ausgebildet bzw. angeordnet sein. Das wenigstens eine Scheibenbauteil kann um eine bevorzugt in Maschinenquerrichtung verlaufende Klappachse umklappbar sein, zur Verhinderung einer Störung des Fahrstands bevorzugt in Richtung vom Fahrstandvolumen weg. Ebenso kann das wenigstens eine Scheibenbauteil translatorisch in Maschinenhöhenrichtung relativ zum Maschinenrahmen bewegbar sein, etwa um die Scheibe in einem Stauvolumen des Maschinenkörpers versenken und aus diesem Ausschieben zu können. Auch Mischformen von translatorischer und rotatorischer Bewegung des mindestens einen Scheibenbauteils sind denkbar. Die Schutzscheibe und die Scheibe können jeweils auf unterschiedliche Art und Weise, also mit individueller und unterschiedlicher Kinematik, relativ zum Maschinenrahmen beweglich sein. Die Schutzscheibe ist auch relativ zum Dach bzw. zum Leitbauteil beweglich. Die Scheibe kann gemeinsam mit der Gehäuseschale oder relativ zu dieser beweglich sein.

Ein besonderer Vorteil des vorliegend diskutierten Daches liegt in der möglichen Vermeidung von kollisionsträchtigen Hindernissen, wie in den Bewegungsraum des Fahrstands hineinragenden Ästen, Werbe- oder Verkehrsschildern, Kabelbrücken und dergleichen. Dann nämlich, wenn das Dach in vorteilhafter Weise relativ zum Maschinenrahmen heb- und senkbar mit dem Maschinenrahmen verbunden ist, kann zur Kollisionsvermeidung bei Annäherung an ein Hindernis die Dachfläche minimiert und das durch den Basisabschnitt gebildete "Restdach" abgesenkt werden. Die Bodenbearbeitungsmaschine bleibt in diesem Zustand nicht nur vollständig manövrierfähig, sondern vollständig arbeitsfähig und kann vollumfänglich vom Maschinenführer auf dem Fahrstand bedient werden, ohne dass eine Kollision des Hindernisses mit der Dachstruktur zu befürchten ist. Der Basisabschnitt, beispielsweise die Gehäuseschale des Basisabschnitts, kann in vorteilhafter Weise in eine Ausnehmung des Maschinenkörpers abgesenkt werden, sodass bei abgesenktem Dach kein Teil der Dachstruktur in Maschinenhöhenrichtung über den übrigen Maschinenkörper vorsteht.

Grundsätzlich kann der Ausziehabschnitt in Maschinenlängsrichtung von der Maschinenvorderseite in Richtung zum Maschinenheck hin oder in umgekehrter Richtung zur Vergrößerung der Dachfläche ausgezogen werden. Bevorzugt ist der Basisabschnitt des Dachs an einem dem Heck der Bodenbearbeitungsmaschine näheren Endabschnitt des Fahrstands mit dem Maschinenrahmen verbunden, besonders bevorzugt durch eine Hubeinrichtung zum Heben und Senken des Basisabschnitts. Die Ausziehrichtung ist dann vom Maschinenheck in Richtung zu Maschinenvorderseite hin. Dies führt zu der bei den bisher bekannten Hartschalendächern weiter verbreiteten Auskragrichtung des Daches von einem Dachträger am heckseitigen Endbereich des Fahrstandes in Maschinenlängsrichtung zum vorderseitigen Endbereich des Fahrstandes hin. Dementsprechend ist bevorzugt die oben genannte Scheibe eine Heckscheibe und, so vorhanden, die oben genannte Schutzscheibe eine vordere Windschutzscheibe.

Um den Maschinenführer effektiv vor äußeren Einflüssen, wie Sonnenlicht und Witterung, zu schützen, erstreckt sich das Dach bevorzugt über wenigstens 90 % der Breite einer Plattform des Fahrstands, auf welcher der Maschinenführer sich während des bestimmungsgemäßen Betriebs aufhält, um die Bodenbearbeitungsmaschine zu steuern. Die Abmessung der Dacherstreckung in Maschinenquerrichtung, also in Breitenrichtung der Plattform des Fahrstands, ist bevorzugt unabhängig von der Ausziehlänge des Ausziehabschnitts vom Basisabschnitt, also unabhängig von der in Maschinenlängsrichtung eingestellten Dachfläche.

Die vorliegende Erfindung wird nachfolgend anhand der beiliegenden Zeichnungen näher erläutert werden. Es stellt dar:
- Fig. 1: eine grobschematische Darstellung einer erfindungsgemäßen Ausführungsform einer Bodenbearbeitungsmaschine in Gestalt einer Boden- oder Straßengroßfräse mit einem Fahrstand mit voll ausgefahrenem Dach mit maximaler Dachfläche,
- Fig. 2: eine grobschematische Darstellung der Bodenbearbeitungsmaschine von Fig. 1 mit halb ausgefahrenem Dach mit gegenüber Fig. 1 verringerter Dachfläche,
- Fig. 3: eine grobschematische Darstellung der Bodenbearbeitungsmaschine der Fig. 1 und 2 mit eingefahrenem Dach mit minimaler Dachfläche, aber angehobenem Basisabschnitt, und
- Fig. 4: eine grobschematische Darstellung der Bodenbearbeitungsmaschine von Fig. 3 mit eingefahrenem Dach und abgesenktem Basisabschnitt des Dachs.

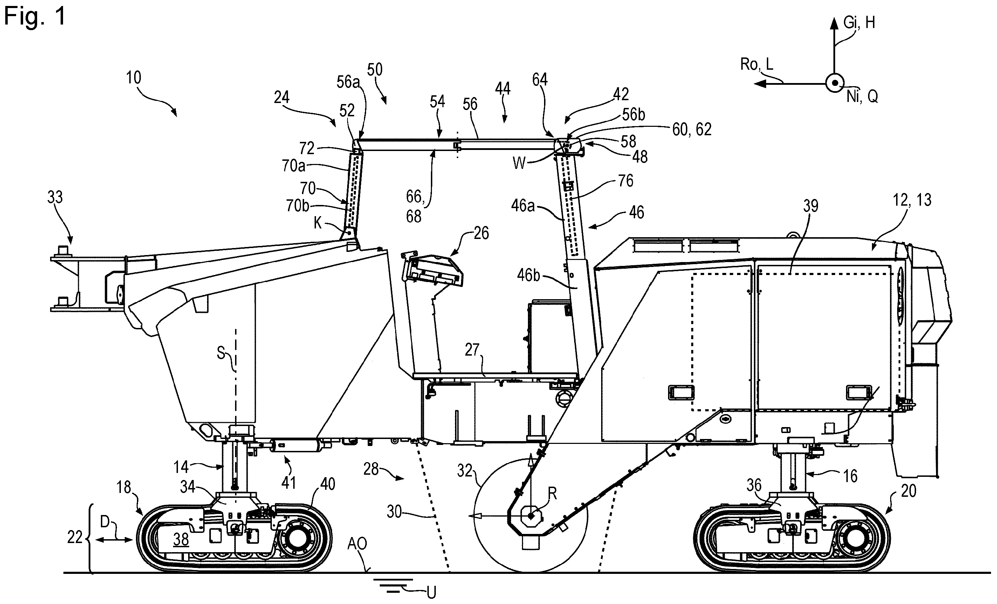

In Figur 1 ist eine erfindungsgemäße Ausführungsform einer Bodenbearbeitungsmaschine in Gestalt einer Boden- oder Straßengroßfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und mit dem Maschinenrahmen 12 verbundene, gegebenenfalls relativ zu diesem bewegliche Bauteile der Maschine 10.

Ein kartesisches Dreibein zeigt die parallel zur Zeichenebene von Figur 1 in Maschinenlängsrichtung L verlaufende Rollachse Ro, die hierzu orthogonale, in Maschinenhöhenrichtung H verlaufende Gierachse Gi und die zu jeder der beiden vorgenannten Achsen Ro und Gi sowie zur Zeichenebene von Figur 1 orthogonale, in Maschinenquerrichtung Q verlaufende Nickachse Ni. Der Pfeil der Maschinenlängsrichtung L weist in die Vorwärtsfahrtrichtung der Maschine 10.

Der Betrachter von Figur 1 blickt auf die Bodenbearbeitungsmaschine oder kurz "Maschine" 10 in längs der Nickachse Ni.

Der Maschinenkörper 13 umfasst ein Paar vorderer Hubsäulen 14 und ein Paar hinterer Hubsäulen 16, von welchen jede einenends in Maschinenhöhenrichtung H relativ zum Maschinenrahmen 12 bewegbar mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar. In den Figuren sind jeweils nur die an der Maschine linken Hubsäulen 14 und 16 mit ihren Laufwerken 18 bzw. 20 zu erkennen, welche die dahinter liegenden rechten Hubsäulen 14 bzw. 16 mit deren Laufwerken 18 bzw. 20 verdecken.

Die Laufwerke 18 und 20 sind beispielhaft als Kettenlaufwerke dargestellt. Einzelne oder alle Laufwerke 18 oder/und 20 können abweichend hiervon auch Radlaufwerke sein. Die Laufwerke 18 und 20 bilden gemeinsam ein Fahrwerk 22 der Bodenbearbeitungsmaschine 10.

Die Bodenbearbeitungsmaschine 10 weist einen Fahrstand 24 auf, von dem aus ein Maschinenführer über ein Bedienpult 26 die Maschine 10 steuern kann. Weiter weist der Fahrstand 24 eine, bevorzugt schwingungsmäßig vom Maschinenrahmen 12 entkoppelte, Plattform 27 auf, welche eine Standfläche für den auf dem Fahrstand 24 arbeitenden Maschinenführer bildet.

Unter dem Maschinenrahmen 12 ist eine Arbeitsbaugruppe 28 an diesem angeordnet, hier beispielhaft als Fräsbaugruppe 28 mit einer Fräswalze 32, welche in einem nur strichliniert angedeuteten Fräswalzenkasten 30 aufgenommen ist. Die Fräswalze 32 ist um eine in Maschinenquerrichtung Q verlaufende Fräsachse R rotierbar, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung. Alternativ oder zusätzlich kann die Fräswalze 32 relativ zum Maschinenrahmen 12 höhenverstellbar an diesem aufgenommen sein.

Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen Laufwerken 18 und den hinteren Laufwerken 20 typisch ist. Derartige Großfräsen oder auch bodenabtragende Maschinen im Allgemeinen können ein Transportband aufweisen, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt. Zu erkennen ist jedoch die Aufnahmevorrichtung 33 zur Aufnahme eines Transportbandes am vorderen Längsende des Maschinenrahmens 12.

Die vorderen Hubsäulen 14 sind weiterhin in an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt.

Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind relativ zu den sie tragenden Laufwerk-Verbindungsstrukturen 34 bzw. 36 um eine bodenparallele Neigeachse neigbar.

Das Laufwerk 18 mit einer durch den Doppelpfeil D angedeuteten Laufrichtung vorwärts (in Fig. 1 nach links) und rückwärts (in Fig. 1 nach rechts) weist im dargestellten Beispiel eine radial innere Aufnahme- und Führungsstruktur 38 auf, an der eine umlaufbare Laufkette 40 angeordnet und zur Umlaufbewegung geführt ist. Die Laufwerke 18 und 20 sind im Wesentlichen identisch aufgebaut. Die Laufwerke 18 und 20 sind motorisch angetrieben, in der Regel durch einen nicht gekennzeichneten Hydromotor.

Die Antriebskraftquelle der Maschine 10 bildet am dargestellten Ausführungsbeispiel beispielhaft eine am Maschinenrahmen 12 aufgenommene Brennkraftmaschine 39. Die Maschine 10 kann zusätzlich oder alternativ beispielsweise eine elektrische Antriebskraftquelle aufweisen. Durch die Brennkraftmaschine 39 wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10. Die Brennkraftmaschine 39 ist folglich eine allgemeine Kraftquelle der Maschine 10.

Die Hubsäulen 14 und mit ihr die Laufwerke 18 sind durch eine Lenkvorrichtung 41 um eine Lenkachse S drehbar. Bevorzugt zusätzlich, aber auch alternativ, können die Hubsäulen 16 und mit ihnen deren Laufwerke 20 durch eine Lenkvorrichtung um eine zur Lenkachse S parallele Lenkachse drehbar sein.

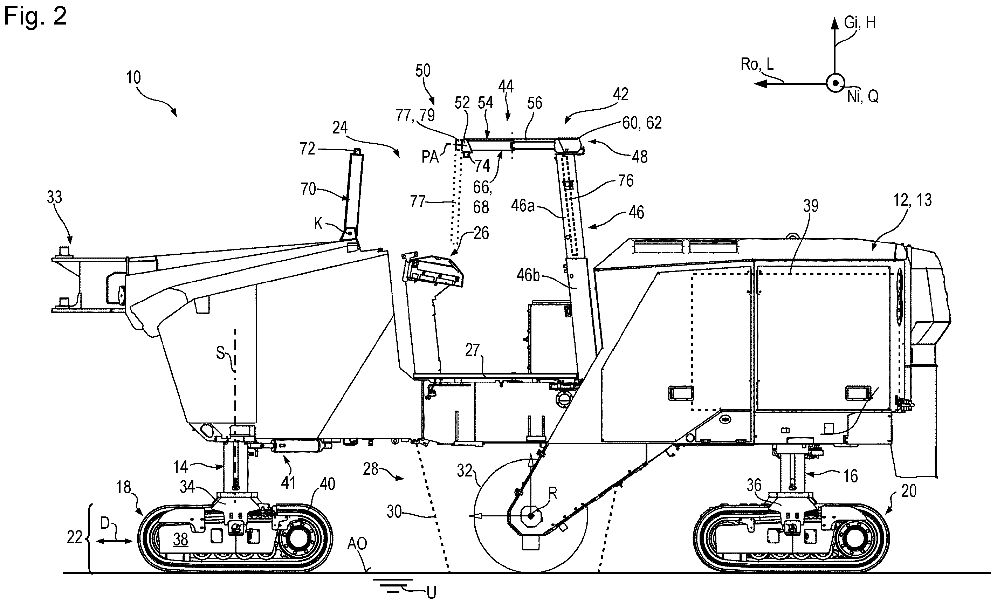

Der Fahrstand 24 ist von einem Schutzdachaufbau 42 bedeckt, welcher ein Schutzdach oder nachfolgend kurz "Dach" 44 umfasst, das über eine längs der Gierachse Gi heb- und senkbare Hubanordnung 46 mit dem Maschinenrahmen 12 bzw. Maschinenkörper 13 verbunden ist. Die Hubanordnung 46 ist bevorzugt teleskopierbar, so dass eine obere, dachnähere, unmittelbar mit einem Basisabschnitt 48 des Dachs 44 verbundene Hubstütze 46a in eine untere, dachfernere, bevorzugt unmittelbar mit dem Maschinenrahmen 12 verbundene Hubstütze 46b einziehbar und aus dieser ausschiebbar ist, etwa durch einen in Figur 1 nicht dargestellten pneumatischen, hydraulischen oder elektromechanischen Hubaktuator. In Figur 1 ist das Schutzdach 44 in seiner angehobenen Betriebsstellung mit maximaler Dachfläche gezeigt. Die Maschine 10 ist, wie auch in den Situationen der Figuren 2, 3 und 4, betriebsbereit.

Das Dach 44 erstreckt sich längs der Nickachse Ni wenigstens über 90 % der Breitenabmessung der Plattform 27 längs der Nickachse Ni, vorzugsweise wenigstens über die gesamte Breite der Plattform oder sogar einseitig oder beidseitig darüber hinaus.

Durch ihre geneigte Anordnung führt das Dach 44 beim Heben und Senken durch die Hubanordnung 46 auch eine sekundäre Bewegungskomponente längs der Rollachse Ro aus. Diese ist aber im Ausmaß erheblich kleiner als die primäre Hub- und Senkbewegungskomponente längs der Gierachse Gi.

Das Dach 44 umfasst neben dem Basisabschnitt 48 einen aus dem Basisabschnitt 48 in Maschinenlängsrichtung L ausziehbaren und wieder einfahrbaren Ausziehabschnitt 50. Der Ausziehabschnitt 50 umfasst ein Leitbauteil 52, im dargestellten Ausführungsbeispiel eine sich in Maschinenquerrichtung Q über die gesamte Dachbreite erstreckende starre Leiste.

Eine Dachfläche 54 ist im Ausführungsbeispiel gebildet durch eine flexible Materialbahn 56, etwa ein gewebtes, vorzugsweise imprägniertes Textil oder eine Folie, auch faserverstärkte Folie, welche mit einem Leitabschnitt 56a am Leitbauteil 52 festgelegt ist und welche mit einem Festlegeabschnitt 56b an einem Wickelrollenkern 58 im Basisabschnitt 48 festgelegt ist. Die flexible Materialbahn 56 bildet ein in Maschinenlängsrichtung längenveränderliches Dachflächenbauteil.

Auch das Leitbauteil 52 und mit ihm die Dachfläche 54 können mit ihrer primären Bewegung längs der Rollachse Ro eine in ihrem Ausmaß untergeordnete sekundäre Bewegungskomponente in einer anderen Raumrichtung aufweisen, insbesondere längs der Gierachse Gi.

Der um die zur Zeichenebene von Figur 1 orthogonale Wickelachse W drehbare Wickelrollenkern 58 kann in Aufwickelrichtung der die Dachfläche 54 bildenden flexiblen Materialbahn 56 vorgespannt, sodass die von der flexiblen Materialbahn 56 gebildete Dachfläche 54 stets gespannt ist.

Der Basisabschnitt 58 weist als ein Basisbauteil 60 eine Gehäuseschale 62 auf, in welcher der Wickelrollenkern 58 um die Wickelachse W drehbar gelagert ist. Die Gehäuseschale 62 weist einen Ausziehspalt 64 auf, welcher seine weitaus größte Abmessung in Maschinenquerrichtung Q aufweist und in Umfangsrichtung um die Wickelachse W nur etwas größer ist als die Dicke der Materialbahn 56, etwa etwas größer als die Änderung des Wicklungsradius auf dem Wickelrollenkern 58 zwischen vollständig ausgezogener und vollständig eingefahrener Betriebsstellung. Durch diesen Ausziehspalt 64 tritt die die Dachfläche 54 bildende Materialbahn 56 aus der Gehäuseschale 62 aus und fährt wieder in diese ein. Am Ausziehspalt 64 kann eine Abstreifeinrichtung, etwa eine Lippe oder/und eine Bürste, vorgesehen sein, um ein Eindringen von Fremdmaterial in die Gehäuseschale 62 durch die Einfahrbewegung der Materialbahn 56 zu vermeiden.

Das Leitbauteil 52 ist durch eine Führungsstruktur 66, im dargestellten Beispiel eine Gelenkarmanordnung 68, mit dem Basisabschnitt 58 bzw. dem Basisbauteil 60 verbunden. Anstelle der Gelenkarmanordnung 68 ist auch eine Scherenanordnung oder eine Teleskopanordnung denkbar. Die Gelenkarmanordnung 68 kann in ihre gestreckte Stellung vorgespannt sein, um die flexible Materialbahn 56 gespannt zu halten und um ein Ausfahren aus einer vollständig eingeklappten Stellung zu erleichtern.

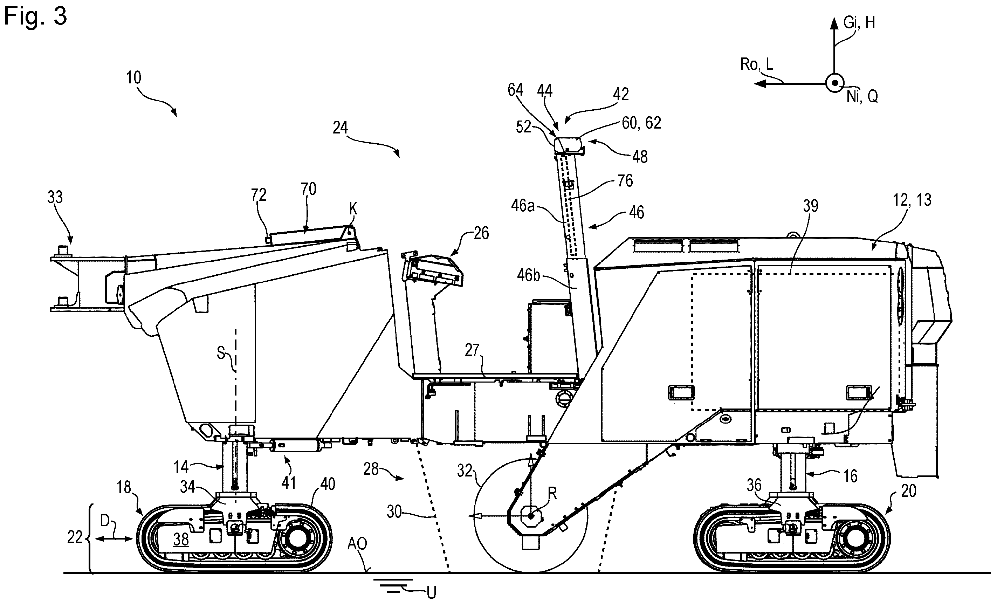

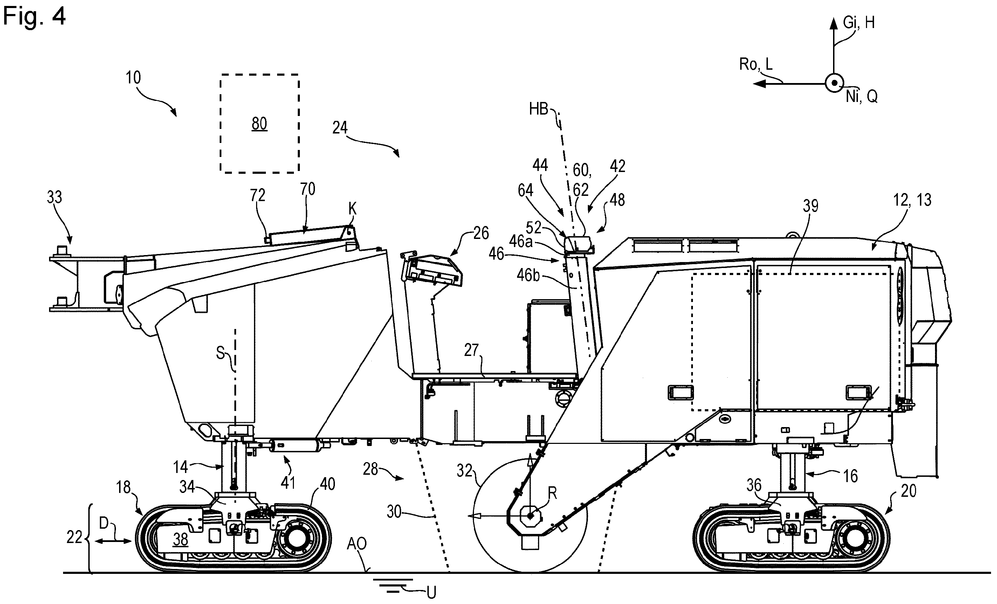

Die Maschine 10 bzw. der Fahrstand 24 weist eine vordere Windschutzscheibe 70 auf, welche um eine in Maschinenquerrichtung Q verlaufende Klappachse K aus der in den Figuren 1 und 2 gezeigten hochgeklappten Stellung nach vorne in die in den Figuren 3 und 4 gezeigte umgeklappte Stellung umklappbar ist. Eine fest mit der Windschutzscheibe 70 verbundene Kopplungsstruktur 72 ist mit einer in Figur 2 erkennbaren Gegenkopplungsstruktur 74 am Leitbauteil 52 lösbar koppelbar. Durch Kopplung der Windschutzscheibe 70 mit dem Leitbauteil 52 kann das ansonsten einseitig vom Basisabschnitt 58 auskragende Dach 44 stabilisiert werden.

Die Windschutzscheibe 70 umfasst in der Regel einen Scheibenrahmen 70a und ein von diesem gehaltenes strichliniert dargestelltes Scheibenpaneel 70b (nur in Fig. 1 gezeigt).

An dem dem Fahrzeugheck nähergelegenen Endbereich des Fahrstands 24 ist eine in Figur 1 lediglich strichliniert dargestellte Heckscheibe 76 starr mit dem Basisbauteil 60 zur gemeinsamen Bewegung längs der translatorischen Hubbahn HB (s. Fig. 4) verbunden. Die Heckscheibe 76 kann zusätzlich oder alternativ mit der oberen Hubstütze 46a bzw. einem Paar von in Maschinenquerrichtung Q mit Abstand voneinander angeordneter oberer Hubstützen 46a verbunden sein. In dem bevorzugten Fall eines Paares von oberen Hubstützen 46a befindet sich die Heckscheibe 76 bevorzugt in Maschinenquerrichtung zwischen den beiden oberen Hubstützen 46a.

In Figur 2 ist das Dach 44 mit, im Vergleich zur Betriebsstellung von Figur 1, verkleinerter Dachfläche 54 dargestellt.

Der Wickelrollenkern 58, welcher der besseren Übersichtlichkeit halber nur in Figur 1 gezeigt ist, kann manuell oder durch einen Motor, etwa einen Elektromotor, zur Drehung angetrieben sein. Eine Motorwelle kann koaxial zur Wickelachse W verlaufen oder quer dazu, insbesondere orthogonal dazu, wobei dann ein Getriebe zwischen Antrieb, sei er nun manuell oder motorisch, und Wickelrollenkern 58 zwischenangeordnet ist. Bevorzugt ist ein solches Getriebe ein Schneckengetriebe, welches zum einen selbsthemmend ist, sodass ein Antriebsmoment nur für die Dauer der Veränderung der Größe der Dachfläche 54 aufgebracht werden muss, und welches zum anderen bei verhältnismäßig geringen Eingangsdrehmomenten sehr große Ausgangsdrehmomente erzeugen kann. Bei elektrischem Antrieb kann das Getriebe zwischen dem Wickelrollenkern 58 und dem Motor ein Planetengetriebe sein. Zur Sicherung der jeweiligen Stellung des Leitbauteils 52 bzw. der Dachfläche 54 kann im Antriebsstrang eine elektrisch lösbare Bremse vorgesehen sein.

Die Selbsthemmung eines solchen Getriebes, insbesondere Schneckengetriebes, erleichtert die Konstruktion des Daches 44 mit in Maschinenlängsrichtung L veränderlicher Dachfläche 54 insofern erheblich, als beispielsweise die Vorspannung des Wickelrollenkerns 58 in Aufwickelrichtung entfallen kann.

In Figur 2 ist außerdem strichliniert eine Stützstrebe 77 als Teil einer alternativen oder zusätzlich vorhandenen Stützvorrichtung 79 gezeigt, welche um eine Schwenkachse PA schwenkbar ist zwischen einer Inaktivstellung, in welcher die Stützstrebe entlang des Leitbauteils 52 in Maschinenquerrichtung Q verläuft und einer heruntergeschwenkten Aktivstellung. Die Stützstrebe 77 ist in der Aktivstellung mit punktierter Linie gezeigt. Die Stützstrebe 77 kann längenveränderlich, etwa teleskopierbar, sein, so dass das Leitbauteil 52 und mit ihm die Dachfläche 54 auch dann am Maschinenkörper 13 abstützbar sind, wenn das Leitbauteil 52 bzw. die Dachfläche 54 nicht bis zur Windschutzscheibe 70 ausgefahren.

Figur 3 zeigt eine vollständig eingefahrene Stellung des Daches 44, bei welcher die gesamte Materialbahn 56 zusammen mit der eingeklappten Gelenkarmanordnung 68 in der Gehäuseschale 62 des Basisabschnitts 58 aufgenommen ist und in welcher das Leitbauteil 52 den Ausziehspalt 64 der Gehäuseschale 62 verschließt. Die Windschutzscheibe 70 ist nun nach vorne umgeklappt.

Die aneinander anliegenden Bauteile: Leitbauteil 52 und Basisbauteil 60 bzw. Gehäuseschale 62, welche jeweils mehrteilig ausgebildet sein können, bilden in Figur 3 ein "Restdach" 44 im Wesentlichen ohne Dachfläche.

Figur 4 zeigt die Maschine 10 mit abgesenkten Schutzdachaufbau 42 bzw. mit abgesenktem Restdach 44. Auf diese Weise kann beispielsweise die Maschine 10 unter einem Hindernis 80, etwa einem Ast, einem Verkehrsschild, einer Kabelbrücke und dergleichen, hindurchfahren, ohne dass eine Kollision zwischen einem Teil des Fahrstands 24, insbesondere des Schutzdachaufbaus 42, und dem Hindernis 80 zu befürchten ist. Gleichzeitig kann sich der Maschinenführer auf dem Fahrstand 24 trotz des abgesenkten Schutzdachaufbaus 42 frei auf dem Fahrstand 24 bewegen. Somit bleibt die Maschine 10 beim Unterfahren des Hindernisses 80 nicht nur manövrierfähig, sondern voll betriebsfähig. Der Maschinenführer muss lediglich selbst dem Hindernis 80 erforderlichenfalls ausweichen, was ihm jedoch leicht fällt.

## Patentansprüche

1. Selbstfahrende Bodenbearbeitungsmaschine (10) zur Material abtragenden oder/und eine Bodenmaterialdichte verändernden oder/und eine Bodenoberfläche (AO) verändernden oder/und Material auftragenden Bearbeitung eines Bodenbereichs (U), wobei die Bodenbearbeitungsmaschine (10) umfasst:
- einen Maschinenrahmen (12),
- ein den Maschinenrahmen (12) tragendes Fahrwerk (22),
- eine Arbeitsvorrichtung (32) zur Bodenbearbeitung,
- eine Kraftquelle (39) zur Abgabe von Leistung an wenigstens eine Funktionsbaugruppe
wobei die Bodenbearbeitungsmaschine (10) einen Fahrstand (24) mit einem Dach (44) mit veränderlicher Dachfläche (54) aufweist,
wobei die Dachfläche (54) in Maschinenlängsrichtung (L) veränderbar ist, wobei das Dach (44) einen Basisabschnitt (48) und einen Ausziehabschnitt (50) aufweist, wobei der Ausziehabschnitt (50) relativ zum Basisabschnitt (48) in Maschinenlängsrichtung (L) ausziehbar und einfahrbar ist, und wobei die Dachfläche (54) abhängig von der Ausziehlänge, längs welcher der Ausziehabschnitt (50) vom Basisabschnitt (48) ausgezogen ist, veränderbar ist,
**dadurch gekennzeichnet, dass** der Ausziehabschnitt (50) ein von der vom Dachflächenmaterial (56) gebildeten Dachfläche (54) verschiedenes Leitbauteil (52) aufweist, welches in Maschinenlängsrichtung (L) vom Basisabschnitt (48) entfernbar und an den Basisabschnitt (48) annäherbar ist, wobei zwischen dem Leitbauteil (52) und dem Basisabschnitt (48) Dachflächenmaterial (56) angeordnet ist, wobei das Leitbauteil (52) durch eine Führungsstruktur (66) mit dem Basisabschnitt (48) des Daches (44) verbunden ist, um die Relativbewegung des Leitbauteils 52) vom Basisabschnitt (48) weg und zu diesem hin zu führen, wobei die Führungsstruktur (66) wenigstens einen Gelenkarm (68), ein Scherengetriebe oder teleskopierbare Führungsstangen umfasst.

2. Selbstfahrende Bodenbearbeitungsmaschine (10) nach Anspruch 1,
**dadurch gekennzeichnet, dass** der Ausziehabschnitt (50) zur Bildung wenigstens eines Teils der Dachfläche (54) ein wickelbares Dachflächenmaterial (56) aufweist.

3. Selbstfahrende Bodenbearbeitungsmaschine (10) nach Anspruch 1 oder 2,
**dadurch gekennzeichnet, dass** der Ausziehabschnitt (50) zur Bildung wenigstens eines Teils der Dachfläche (54) ein faltbares Dachflächenmaterial (56) aufweist.

4. Selbstfahrende Bodenbearbeitungsmaschine (10) nach einem der vorhergehenden Ansprüche,
**dadurch gekennzeichnet, dass** ein Leitabschnitt (56a) des Dachflächenmaterials (56), welcher bei einem die Dachfläche (54) vergrößernden Ausziehen des Ausziehabschnitts (50) weiterem Dachflächenmaterial (56) vorauseilt, zur gemeinsamen Bewegung mit dem Leitbauteil (52) am Leitbauteil (52) festgelegt ist.

5. Selbstfahrende Bodenbearbeitungsmaschine (10) nach einem der vorhergehenden Ansprüche,
**dadurch gekennzeichnet, dass** der Basisabschnitt (48) ein Basisbauteil (60) umfasst, an welchem ein Festlegeabschnitt (56b) des Dachflächenmaterials (56b) festgelegt ist.

6. Selbstfahrende Bodenbearbeitungsmaschine (10) nach Anspruch 5, unter Einbeziehung des Anspruchs 2,
**dadurch gekennzeichnet, dass** das Basisbauteil (60) einen um eine Wickelachse (W) drehbaren Wickelrollenkern (58) umfasst.

7. Selbstfahrende Bodenbearbeitungsmaschine (10) nach einem der vorhergehenden Ansprüche,
**dadurch gekennzeichnet, dass** der Basisabschnitt (48) eine Gehäuseschale (62) umfasst, welche den Ausziehabschnitt (50) in dessen eingefahrenem Zustand wenigstens teilweise umgibt.

8. Selbstfahrende Bodenbearbeitungsmaschine (10) nach einem der vorhergehenden Ansprüche,
**dadurch gekennzeichnet, dass** an einem den Maschinenrahmen (12) umfassenden Maschinenkörper (13) oder/und am Ausziehabschnitt (50) als einem Stützvorrichtungsträger eine Stützvorrichtung (79) angeordnet ist, durch welche der Ausziehabschnitt (50), insbesondere das Leitbauteil (52), am Maschinenkörper (13) der Bodenbearbeitungsmaschine (10) abstützbar ist.

9. Selbstfahrende Bodenbearbeitungsmaschine (10) nach einem der vorhergehenden Ansprüche,
**dadurch gekennzeichnet, dass** die Bodenbearbeitungsmaschine (10) eine in Maschinenquerrichtung (Q) verlaufende Schutzscheibe (70) umfasst, wobei die Schutzscheibe (70) eine Kopplungsstruktur (72) aufweist und wobei das Leitbauteil (52) eine Gegenkopplungsstruktur (74) aufweist, wobei die Kopplungsstruktur (72) und die Gegenkopplungsstruktur (74) bei ausreichender Annäherung des Leitbauteils (52) an die Schutzscheibe (70) mit einander lösbar koppelbar sind.

10. Selbstfahrende Bodenbearbeitungsmaschine (10) nach einem der vorhergehenden Ansprüche, unter Einbeziehung des Anspruchs 7,
**dadurch gekennzeichnet, dass** die Bodenbearbeitungsmaschine (10) eine in Maschinenquerrichtung (Q) verlaufende Scheibe (76) umfasst, wobei die Scheibe (76) eine Verbindungsstruktur aufweist und wobei die Gehäuseschale (62) eine Gegenverbindungsstruktur aufweist, wobei die Verbindungsstruktur und die Gegenverbindungsstruktur mit einander verbunden oder lösbar verbindbar sind.

11. Selbstfahrende Bodenbearbeitungsmaschine (10) nach Anspruch 9 oder 10, **dadurch gekennzeichnet, dass** die Schutzscheibe (70) oder/und die Scheibe (76) relativ zum Maschinenrahmen (12) bewegbar ist bzw. sind.

12. Selbstfahrende Bodenbearbeitungsmaschine (10) nach einem der vorhergehenden Ansprüche,
**dadurch gekennzeichnet, dass** das Dach (44) relativ zum Maschinenrahmen (12) heb- und senkbar mit dem Maschinenrahmen (12) verbunden ist.

13. Selbstfahrende Bodenbearbeitungsmaschine (10) nach Anspruch 12,
**dadurch gekennzeichnet, dass** die Bodenbearbeitungsmaschine (10) mit abgesenktem Dach von einem die Bodenbearbeitungsmaschine (10) auf dem Fahrstand bedienenden Maschinenführer vollständig manövrierfbar und vollständig arbeitsfähig ist.

14. Selbstfahrende Bodenbearbeitungsmaschine (10) nach einem der vorhergehenden Ansprüche,
**dadurch gekennzeichnet, dass** der Basisabschnitt (48) des Dachs (44) an einem dem Heck der Bodenbearbeitungsmaschine (10) näheren Endabschnitt des Fahrstands (24) mit dem Maschinenrahmen (12) verbunden ist.

15. Selbstfahrende Bodenbearbeitungsmaschine (10) nach einem der vorhergehenden Ansprüche,
**dadurch gekennzeichnet, dass** sich das Dach (44) über wenigstens 90 % der Breite einer Plattform des Fahrstands (24) erstreckt, auf welcher der Maschinenführer sich während des bestimmungsgemäßen Betriebs aufhält, um die Bodenbearbeitungsmaschine (10) zu steuern.

## Claims

1. A self-propelled earth working machine (10) for removing material and/or changing a density of ground material and/or changing a ground surface (AO) and/or applying material onto a ground area (U), the earth working machine comprising:
- a machine frame (12),
- a traveling gear (22) supporting the machine frame (12),
- a working apparatus (32) for earth working,
- a power source (39) for outputting power to at least one functional module,
the earth working machine (10) comprising an operator's platform (24) having a canopy (44) having a variable canopy area (54),
wherein the canopy area (54) is variable in the longitudinal machine direction (L),
wherein the canopy (44) has a base section (48) and an extension section (50), wherein the extension section (50) can be extended and retracted relative to the base section (48) in the longitudinal direction (L) of the machine, and wherein the canopy area (54) is variable depending on the extension length along which the extension section (50) is extended from the base section (48),
**characterized in that** the extension section (50) has a guide component (52) which is different from the canopy area (54) formed by the canopy area material (56) and which can moved away from the base section (48) and can be moved closer to the base section (48) in the longitudinal direction (L) of the machine, wherein canopy area material (56) is arranged between the guide component (52) and the base section (48), wherein the guide component (52) is connected to the base section (48) of the canopy (44) by a guide structure (66) in order to guide the relative movement of the guide component (52) away from and toward the base section (48), wherein the guide structure (66) comprises at least one articulated arm (68), a scissor mechanism, or telescopic guide rods.

2. The self-propelled earth working machine (10) as recited in claim 1,
**characterized in that,** for forming at least a portion of the canopy area (54), the extension section (50) comprises as canopy area material a windable canopy area material (56).

3. The self-propelled earth working machine (10) as recited in claim 1 or 2,
**characterized in that** the extension section section (50) for forming at least part of the canopy surface (54) comprises a foldable canopy surface material (56).

4. The self-propelled earth working machine (10) as recited in one of the preceding claims,
**characterized in that** a lead section (56a) of the canopy area material (56), which precedes the further canopy area material (56) when the extension section is pulled out in order to enlarge the canopy area (54), is fixed on the lead component (52) for joint movement with the lead component (52).

5. The self-propelled earth working machine (10) as recited in one of the preceding claims,
**characterized in that** the base section (48) comprises a base component (60), on which a fixation section (56b) of the canopy area material (56b) is fixed.

6. The self-propelled earth working machine (10) as recited in claim 5, with the inclusion of claim 2,
**characterized in that** the base component (60) comprises a winding roll core (58) that is rotatable about a winding axis (W).

7. The self-propelled earth working machine (10) as recited in one of the preceeding claims,
**characterized in that** the base section (48) comprises a housing shell (62), which surrounds the extension section (50) in its retracted state at least partially.

8. The self-propelled earth working machine (10) as recited in one of the preceding claims,
**characterized in that** a support mechanism (79) is situated on a machine body (13) comprising the machine frame (12) and/or on the extension section (50) as a support mechanism carrier, by which the extension section (50), in particular the lead component (52), is supportable on the machine body (13) of the earth working machine (10).

9. The self-propelled earth working machine (10) as recited in one of the preceding claims,
**characterized in that** the earth working machine (10) comprises a protective shield (70) running in the transverse machine direction (Q), the protective shield (70) having a coupling structure and the lead component (52) having a mating coupling structure (74), the coupling structure (72) and the mating coupling structure (74) being releasably coupleable to each other when the lead component (52) is brought sufficiently near the protective shield (70).

10. The self-propelled earth working machine (10) as recited in one of the preceding claims, with the inclusion of claim 7,
**characterized in that** the earth working machine (10) comprises a shield (76) running in the transverse machine direction (Q), the shield (76) having a connecting structure and the housing shell (62) having a mating connecting structure, the connecting structure and the mating connecting structure being connected or being releasably connectible to each other.

11. The self-propelled earth working machine (10) as recited in claim 9 or 10, **characterized in that** the protective shield (70) and/or the shield (76) are/is movable relative to the machine frame (12).

12. The self-propelled earth working machine (10) as recited in one of the preceding claims,
**characterized in that** the canopy (44) is connected to the machine frame (12) so as to be liftable and lowerable relative to the machine frame (12).

13. The self-propelled earth working machine (10) as recited in claim 12,
**characterized in that** that the earth working machine (10) with lowered roof can be completely maneuvered and is fully operational by a machine operator operating the earth working machine (10) from the operator's stand.

14. The self-propelled earth working machine (10) as recited in one of the preceding claims,
**characterized in that** the base section (48) of the canopy (44) is connected to the machine frame (12) on an end section of the operator's platform (24) closer to the rear of the earth working machine (10).

15. The self-propelled earth working machine (10) as recited in one of the preceding claims,
**characterized in that** the canopy (44) extends over at least 90 % of the width of a floor of the operator's platform (24), on which the machine operator is located during normal operation in order to control the earth working machine (10).

## Revendications

1. Machine automotrice de travail du sol (10) pour le traitement d'une zone de sol (U) consistant à enlever de la matière et/ou à modifier la densité du sol et/ou à modifier la surface du sol (AO) et/ou à appliquer de la matière, la machine de travail du sol (10) comprenant :
- un châssis de machine (12),
- un train de roulement (22) supportant le châssis de machine (12),
- un dispositif de travail (32) pour le travail du sol,
- une source d'énergie (39) pour fournir de la puissance à au moins un module fonctionnel,
la machine de travail du sol (10) comportant un poste de conduite (24) avec un toit (44) à surface variable (54),
la surface de toit (54) étant variable dans la direction longitudinale (L) de la machine, le toit (44) comportant une partie de base (48) et une partie extensible (50), la partie extensible (50) pouvant être sortie et rentrée par rapport à la partie de base (48) dans la direction longitudinale (L) de la machine, et la surface de toit (54) étant variable en fonction de la longueur d'extraction sur laquelle la partie extensible (50) est extraite de la partie de base (48),
**caractérisé en ce que** la partie extensible (50) comporte un élément de guidage (52) différent de la surface de toit (54) formée par le matériau de surface de toit (56) (52) qui peut être éloigné de la partie de base (48) et rapproché de la partie de base (48) dans la direction longitudinale (L) de la machine, l'élément de guidage (52) étant disposé entre la partie de base (48) et le matériau de surface de toit (56) est disposé entre l'élément de guidage (52) et la partie de base (48), l'élément de guidage (52) étant connecté à la partie de base (48) du toit (44) par une structure de guidage (66) afin de guider le mouvement relatif de l'élément de guidage (52) à l'écart de la partie de base (48) et vers celle-ci, la structure de guidage (66) comprenant au moins un bras articulé (68), un mécanisme à ciseaux ou des tiges de guidage télescopiques.

2. Machine de travail du sol automotrice (10) selon la revendication 1,
**caractérisée en ce que** la partie extensible (50) destinée à former au moins une partie de la surface de toit (54) comprend un matériau de surface de toit enroulable (56).

3. Machine de travail du sol automotrice (10) selon la revendication 1 ou 2,
**caractérisée en ce que** la partie extensible (50) destinée à former au moins une partie de la surface de toit (54) comprend un matériau de surface de toit pliable (56).

4. Machine de travail du sol automotrice (10) selon l'une des revendications précédentes,
**caractérisée en ce qu'**une partie de guidage (56a) du matériau de surface de toit (56), qui précède le matériau de surface de toit supplémentaire (56) lors d'un extension de la partie extensible (50) agrandissant la surface de toit (54), est fixée sur l'élément de guidage (52) pour se déplacer conjointement avec l'élément de guidage (52).

5. Machine de travail du sol automotrice (10) selon l'une des revendications précédentes,
**caractérisée en ce que** la partie de base (48) comprend un élément de base (60) sur lequel est fixée une partie de fixation (56b) du matériau de surface de toit (56b).

6. Machine de travail du sol automotrice (10) selon la revendication 5, incluant la revendication 2,
**caractérisée en ce que** l'élément de base (60) comprend un noyau de rouleau d'enroulement (58) pouvant tourner autour d'un axe d'enroulement (W).

7. Machine de travail du sol automotrice (10) selon l'une des revendications précédentes,
**caractérisée en ce que** la partie de base (48) comprend une coque de boîtier (62) qui entoure au moins partiellement la partie extensible (50) dans son état rétracté.

8. Machine automotrice de travail du sol (10) selon l'une des revendications précédentes,
**caractérisée en ce qu'un** dispositif de support (79) est disposé sur un corps de machine (13) comprenant le châssis de machine (12) et/ou sur la partie extensible (50) en tant que support de dispositif de support, grâce auquel la partie extensible (50), en particulier l'élément de guidage (52), peut être supportée sur le corps de machine (13) de la machine de travail du sol (10).

9. Machine de travail du sol automotrice (10) selon l'une des revendications précédentes,
**caractérisée en ce que** la machine de travail du sol (10) comprend une plaque de protection (70) s'étendant dans la direction transversale (Q) de la machine, la plaque de protection (70) présentant une structure d'accouplement (72) et l'élément de guidage (52) comportant une structure d'accouplement opposée (74), la structure d'accouplement (72) et la structure d'accouplement opposée (74) pouvant être accouplées de manière amovible l'une à l'autre lorsque l'élément de guidage (52) se rapproche suffisamment de la plaque de protection (70).

10. Machine de travail du sol automotrice (10) selon l'une des revendications précédentes, en incluant la revendication 7,
**caractérisée en ce que** la machine de travail du sol (10) comprend un panneau (76) s'étendant dans la direction transversale (Q) de la machine, le panneau (76) présentant une structure de liaison et la coque de carter (62) présente une structure de contre-connexion, la structure de connexion et la structure de contre-connexion étant connectées entre elles ou pouvant être connectées de manière amovible.

11. Machine de travail du sol automotrice (10) selon la revendication 9 ou 10,
**caractérisée en ce que** le panneau de protection (70) et/ou le panneau (76) est/sont mobile(s) par rapport au châssis de machine (12).

12. Machine de travail du sol automotrice (10) selon l'une des revendications précédentes,
**caractérisée en ce que** le toit (44) est connecté au châssis de machine (12) de manière à pouvoir être levé et abaissé par rapport au châssis de machine (12).

13. Machine de travail du sol automotrice (10) selon la revendication 12,
**caractérisée en ce que** la machine de travail du sol (10) est entièrement manœuvrable et entièrement opérationnelle avec le toit abaissé par un conducteur commandant la machine de travail du sol (10) sur le poste de conduite.

14. Machine de travail du sol automotrice (10) selon l'une des revendications précédentes,
**caractérisée en ce que** la partie de base (48) du toit (44) est connectée au châssis de machine (12) au niveau d'une partie d'extrémité du poste de conduite (24) plus proche de l'arrière de la machine de travail du sol (10).

15. Machine de travail du sol automotrice (10) selon l'une des revendications précédentes,
**caractérisée en ce que** le toit (44) s'étend sur au moins 90 % de la largeur d'une plate-forme du poste de conduite (24) sur laquelle se trouve le conducteur de la machine pendant le fonctionnement conforme à la destination afin de commander la machine de travail du sol (10).
